# EUROPEAN PATENT SPECIFICATION

(11) **EP 4 184 680 B1**
(45) Date of publication and mention of the grant of the patent: **30.09.2026**
(21) Application number: 22736943.6
(22) Date of filing: 11.01.2022
(51) Int. Cl.: H01M 50/24, H01M 50/213, H01M 50/249, H01M 50/204, B29C 39/10, H01M 50/293, H01M 10/653, B29C 39/26, B29C 35/02, B29C 33/10, B29K 83/00, H01M 10/613, B29C 45/14, B29L 31/34

(54) **MANUFACTURING METHOD FOR BATTERY PACK**
HERSTELLUNGSVERFAHREN FÜR BATTERIEPACK
PROCÉDÉ DE FABRICATION POUR BLOC-BATTERIE

(30) Priority: 11.01.2021 KR 20210003549
(43) Date of publication of application: 24.05.2023
(73) Proprietor: LG Energy Solution, Ltd., Seoul 07335 (KR)
(72) Inventor: OH, Kwang-Keun, Daejeon 34122 (KR); YANG, Jin-Oh, Daejeon 34122 (KR); JUNG, In-Hyuk, Daejeon 34122 (KR); CHOI, Hae-Won, Daejeon 34122 (KR)
(74) Representative: Goddar, Heinz J.
(86) International application number: PCT/KR2022/000503
(87) International publication number: WO 2022/149966

(56) References cited:
- WO-A1-2020/116825
- JP-A- 2000 108 687
- JP-A- 2011 508 366
- JP-A- 2020 019 236
- JP-B1- 5 221 820
- KR-A- 20100 094 174
- US-A1- 2017 194 675
- US-A1- 2018 301 771
- US-A1- 2018 366 701
- US-A1- 2020 083 575

## Description

### TECHNICAL FIELD

The present disclosure relates to a method for manufacturing the battery pack.

The present application claims the benefit of Korean Patent Application No. 10-2021-0003549 filed on January 11, 2021 with the Korean Intellectual Property Office.

### BACKGROUND ART

Due to their characteristics of being easily applicable to various products and electrical properties such as a high energy density, secondary batteries are not only commonly applied to portable devices, but universally applied to electric vehicles (EVs) or hybrid electric vehicle (HEVs) that are driven by an electrical driving source. Such secondary batteries are gaining attention for their primary advantage of remarkably reducing the use of fossil fuels and not generating by-products from the use of energy, making it a new eco-friendly and energy efficient source of energy.

The types of secondary batteries widely used at present include lithium ion batteries, lithium polymer batteries, nickel cadmium batteries, nickel hydrogen batteries, nickel zinc batteries or the like. This unit secondary battery cell, i.e., a unit battery cell has an operating voltage of about 2.5V to 4.5V. Accordingly, when a higher output voltage is required, a plurality of battery cells may be connected in series to form a battery pack. Additionally, the battery pack may be fabricated by connecting the plurality of battery cells in parallel according to the charge/discharge capacity required for the battery pack. Accordingly, the number of battery cells included in the battery pack may be variously set depending on the required output voltage or charge/discharge capacity.

Meanwhile, when fabricating the battery pack by connecting the plurality of battery cells in series/in parallel, it is general to make a battery module including at least one battery cell, and then fabricate a battery pack or a battery rack using at least one battery module with an addition of any other component.

The conventional battery pack includes a pack case to support and fix the plurality of battery cells. In general, the conventional pack case includes an assembly of a plurality of frame members including a front frame member, a rear frame member, a side frame member, an upper frame member and a lower frame member.

Accordingly, the conventional battery pack has increases in manufacturing cost and process complexity due to the pack case structure including the assembly of the plurality of frame members.

Therefore, in the manufacture of the pack case of the battery pack, there is a need for an approach to achieve price competitiveness and reduce the manufacturing process cost.

US 2018/0366701 A1 relates to a battery pack which includes a plate-like holder part made of metal and an adhesive agent made of resin.

US 2020/083575 A1 relates to a battery module which includes a thermally conductive adhesive solution made of resin for fixing a plurality of can-type secondary batteries such that a lower surface of the adhesive solution is flush with lower ends of the batteries.

US 2018/0301771 A1 relates to a battery system which includes a potting compound made of resin wherein a plurality of battery cells is potted such that a lower surface of the potting compound is flush with lower ends of the batteries.

WO 2020/116825 A1 relates to a battery module and to a method for manufacturing the same, providing an indication of a corresponding apparatus for manufacturing the battery module. A heat dissipation resin material fills a cavity between a battery cell stack and a lower plate of a mono frame of the battery module.

JP 5221820 B1 relates to a battery block and to a method for manufacturing the same. A plurality of metal pipe-shaped members serving as a holder plurality is disposed inside a frame, a plurality of unit cells is disposed inside the metal pipe-shaped members, and an insulating resin is injected into gaps formed between the unit cells and the metal pipe-shaped member and as well as between the metal pipe-shaped members and the frame.

US 2017/194675 A1 relates to a battery pack for an electric vehicle which may include a plurality of battery cells arranged in on or more rows, a coolant loop, and a molded insert that encompasses the plurality of cells and the coolant loop such that the plurality of cells and the coolant loop are fixed relative to each other.

### DISCLOSURE

### Technical Problem

The present disclosure is directed to providing a method for manufacturing a battery pack with price competitiveness and reduced manufacturing cost.

### Technical Solution

The present disclosure provides a battery pack including a plurality of battery cells, and a pack case to accommodate the plurality of battery cells, wherein the pack case includes a potting resin which covers all sides of the plurality of battery cells and is filled to a predetermined height between the plurality of battery cells.

An upper surface of the potting resin may be disposed at a lower position by a predetermined height than the upper end of the plurality of battery cells in a heightwise direction of the plurality of battery cells, and a lower surface of the potting resin may be disposed at a higher position by a predetermined height than the lower end of the plurality of battery cells in the heightwise direction of the plurality of battery cells.

The potting resin may include silicone resin.

Additionally, the present disclosure provides an apparatus for manufacturing a battery pack including a resin injection frame having an accommodation space for accommodating the plurality of battery cells to inject a resin for covering the plurality of battery cells, a resin injection port provided on a side of the resin injection frame to inject the resin into the accommodation space, and an air outlet spaced apart from the resin injection port, the air outlet through which air inside the accommodation space is forced out when injecting the resin.

The resin injection frame may be separated from the plurality of battery cells and the cured resin when the cure of the resin injected into the accommodation space is completed.

The resin injection frame may include a lower frame which covers a bottom of the plurality of battery cells, an upper frame disposed opposite the lower frame to cover a top of the plurality of battery cells, and a side frame detachably connected to the lower frame and the upper frame, wherein the side frame covers sides of the plurality of battery cells.

The resin injection port and the air outlet may be provided in the side frame.

The resin is injected in a room temperature thin state.

According to the invention, the present disclosure provides a method for manufacturing a battery pack including placing the plurality of battery cells in an accommodation space of a resin injection frame, injecting the resin for covering the plurality of battery cells into the accommodation space of the resin injection frame, and separating the resin injection frame from the plurality of battery cells and the cured resin when the cure of the resin injected into the accommodation space is completed.

The resin may be injected into the accommodation space through a resin injection port provided in the resin injection frame.

The resin is injected in a room temperature thin state.

The resin injection frame may include a lower frame which cover a bottom of the plurality of battery cells, an upper frame disposed opposite the lower frame to cover a top of the plurality of battery cells, and a side frame detachably connected to the lower frame and the upper frame, wherein the side frame covers sides of the plurality of battery cells.

The resin injection frame may have an air outlet spaced apart from the resin injection port, the air outlet through which air inside the accommodation space is forced out when injecting the resin.

### Advantageous Effects

According to the various embodiments as described above, it is possible to provide a battery pack with price competitiveness and reduced manufacturing cost, and a method for manufacturing the battery pack.

### DESCRIPTION OF DRAWINGS

The accompanying drawings illustrate a preferred embodiment of the present disclosure, and together with the detailed description of the present disclosure described below, serve to provide a further understanding of the technical aspects of the present disclosure, and thus the present disclosure should not be construed as being limited to the drawings.
FIG. 1 is a diagram illustrating a battery pack according to an embodiment of the present disclosure.
FIG. 2 is a diagram illustrating an apparatus for manufacturing the battery pack of FIG. 1.
FIG. 3 is an exploded perspective view of the apparatus for manufacturing a battery pack of FIG. 2.
FIGS. 4 to 9 are diagrams illustrating a method according to the invention for manufacturing a battery pack through the apparatus for manufacturing a battery pack of FIG. 2.
FIG. 10 is a flowchart illustrating a method according to the invention for manufacturing the battery pack of FIG. 1.
FIG. 11 is a diagram illustrating a vehicle including a battery pack according to an embodiment of the present disclosure.

### BEST MODE

The present disclosure will become apparent by describing a preferred embodiment of the present disclosure in detail with reference to the accompanying drawings. The embodiment described herein is provided by way of illustration to help an understanding of the present disclosure, and it should be understood that various modifications may be made to the present disclosure in any other embodiment than the embodiment described herein. Additionally, to help an understanding of the present disclosure, the accompanying drawings are not shown in true scale and may depict some exaggerated elements.

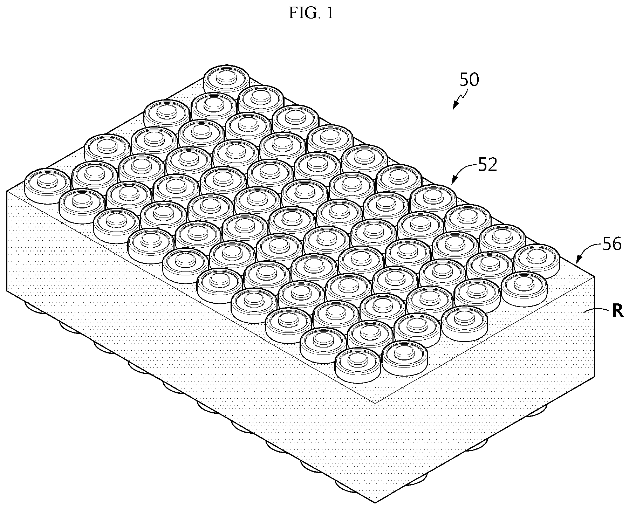

FIG. 1 is a diagram illustrating a battery pack according to an embodiment of the present disclosure.

Referring to FIG. 1, the battery pack 50 includes a plurality of battery cells 52 and a pack case 56 for accommodating the plurality of battery cells, and the pack case 56 may include a potting resin R that covers all the sides of the plurality of battery cells 52, and is filled to a predetermined height between the plurality of battery cells 52.

The plurality of battery cells 52 may include secondary batteries, for example, cylindrical secondary batteries, pouch type secondary batteries or prismatic secondary batteries. Hereinafter, in this embodiment, a description is made based on cylindrical secondary batteries as the plurality of battery cells 52.

The plurality of battery cells 52 are inserted into the potting resin R, with the upper and lower ends exposed at least in part.

The plurality of battery cells 52 may have a structure of mounting a busbar member for electrical connection or connecting to any other component at the partially exposed upper and lower ends.

To this end, in the pack case 56, the upper surface of the potting resin R may be disposed at a lower position by a predetermined height than the upper end of the plurality of battery cells 52 in the heightwise direction of the plurality of battery cells 52, and the lower surface of the potting resin R may be disposed at a higher position by a predetermined height than the lower end of the plurality of battery cells 52 in the heightwise direction of the plurality of battery cells 52.

The potting resin R may include materials having high heat resistance, electrical insulating properties, weather resistance and water repellency. For example, the potting resin R may include silicone resins.

As described above, in this embodiment, since the pack case 56 includes the potting resin R filled between the battery cells 52 to fully cover the battery cells 52, it is possible to provide the battery pack 50 having a slimmer and simpler structure and a price competitiveness advantage in price compared to the conventional pack case structure including an assembly of a plurality of frame members.

Additionally, in this embodiment, it is possible to uniformly dissipate heat generated from the battery cells 52 through the pack case 56 made of the potting resin R filled between the battery cells 52 to fully cover the battery cells 52, thereby significantly increasing the heat dissipation efficiency of the battery cells 52.

Accordingly, in this embodiment, it is possible to significantly increase the cooling performance of the battery cells 52 through the pack case 56 including the potting resin R.

Hereinafter, a battery pack manufacturing apparatus and method for manufacturing the pack case 56 of the battery pack 50 according to this embodiment will be described in more detail.

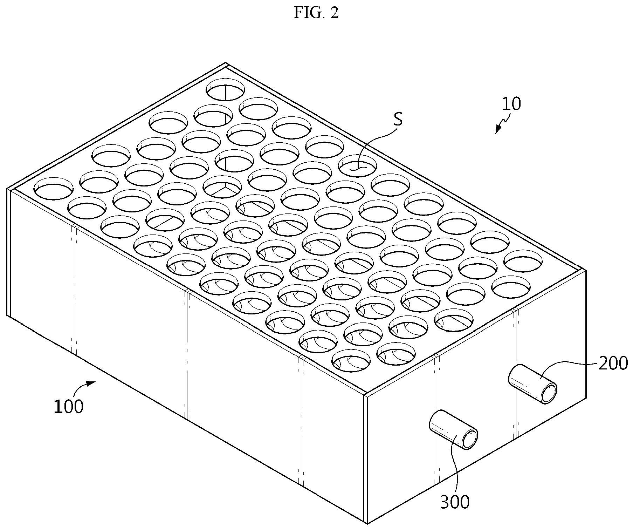

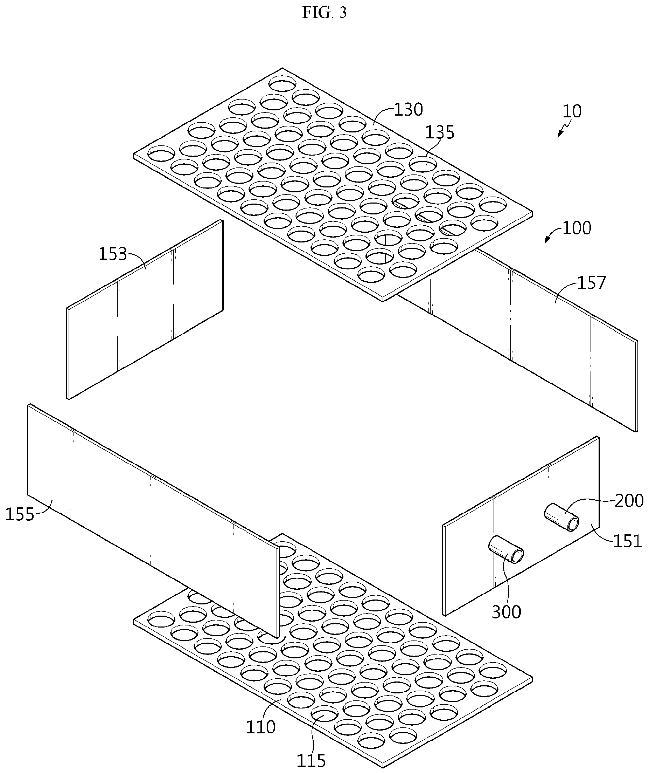

FIG. 2 is a diagram illustrating an apparatus for manufacturing the battery pack of FIG. 1, and FIG. 3 is an exploded perspective view of the apparatus for manufacturing a battery pack of FIG. 2.

Referring to FIGS. 2 and 3, the apparatus 10 for manufacturing a battery pack may manufacture the pack case 56 (see FIG. 1) for supporting and fixing the plurality of battery cells 52 (see FIG. 1) of the battery pack 50 (see FIG. 1).

The apparatus 10 for manufacturing a battery pack may include a resin injection frame 100, a resin injection port 200 and an air outlet 300.

The resin injection frame 100 may have an accommodation space S that accommodates the plurality of battery cells 52 to inject a resin R (see FIG. 1) for covering the plurality of battery cells 52.

When the cure of the resin R (see FIG. 1) injected into the accommodation space S is completed, the resin injection frame 100 may be separated from the plurality of battery cells 52 and the cured resin R (see FIG. 1).

The resin injection frame 100 may include a lower frame 110, an upper frame 130 a side frame 150.

The lower frame 110 is used to cover the bottom of the plurality of battery cells 52, and may support the plurality of battery cells 52. To this end, the lower frame 110 may have a size that is large enough to cover the bottom of the plurality of battery cells 52.

The lower frame 110 may have a cell insertion hole 115.

The cell insertion hole 115 is where the bottom of the plurality of battery cells 52 are inserted, and a plurality of cell insertion holes 115 may be provided. The number of cell insertion holes 115 corresponding to the number of battery cells 52 may be provided.

The upper frame 130 may be disposed opposite the lower frame 110, and may cover the top of the plurality of battery cells 52. To this end, the upper frame 130 may have a size that is large enough to cover the top of the plurality of battery cells 52.

The upper frame 130 may have a cell insertion hole 135.

The cell insertion hole 135 is where the upper part of the plurality of battery cells 52 are inserted, and a plurality of cell insertion holes 135 may be provided. The number of cell insertion holes 135 corresponding to the number of battery cells 52 may be provided.

The side frame 150 may be detachably connected to the lower frame 110 and the upper frame 130, and may be formed to cover the sides of the plurality of battery cells 52.

The side frame 150 may include a first side plate 151, a second side plate 153, a third side plate 155 and a fourth side plate 157.

The first side plate 151 may cover at least one side of the plurality of battery cells 52. Specifically, the first side plate 151 may cover the right side of the plurality of battery cells 52. The first side plate 151 may include the resin injection port 200 and the air outlet 300 as described below.

The second side plate 153 may be disposed opposite the first side plate 151, and may cover at least one other side of the plurality of battery cells 52. Specifically, the second side plate 153 may cover the left side of the plurality of battery cells 52.

The third side plate 155 may cover the front side of the plurality of battery cells 52. The third side plate 155 may be detachably coupled to the first side plate 151 and the second side plate 153

The fourth side plate 157 may be disposed opposite the third side plate 155, and may cover the rear side of the plurality of battery cells 52. The fourth side plate 157 may be detachably coupled to the first side plate 151 and the second side plate 153

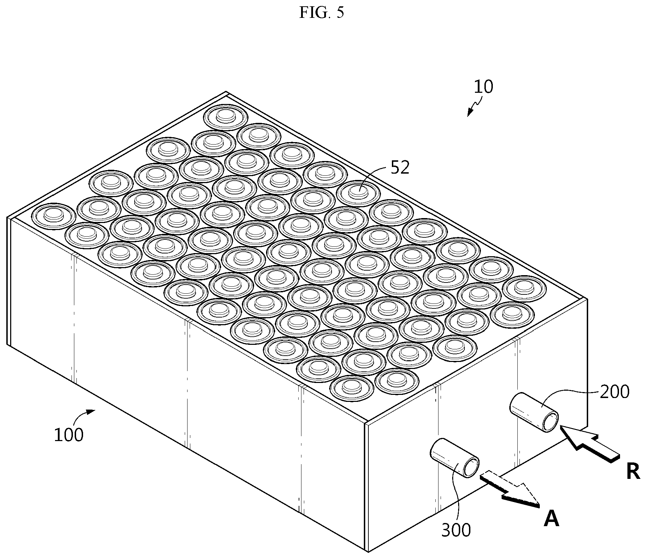

The resin injection port 200 may be used to inject the resin R (see FIG. 5) into the accommodation space S. The resin R is injected into the accommodation space S through the resin injection port 200 in a room temperature thin state. In this embodiment, since the resin R is injected in room temperature state, it is possible to prevent thermal damage of the plurality of battery cells 52 caused by the injection of the resin R, compared to when the resin R is injected in heated state.

The resin injection port 200 may be provided on one side of the resin injection frame 100. Specifically, the resin injection port 200 may be provided in the side frame 150. More specifically, the resin injection port 200 may be provided in the first side plate 151 of the side frame 150.

The air outlet 300 is used to force air A (see FIG. 5) inside the accommodation space out when injecting the resin R (see FIG. 5), and may be spaced apart from the resin injection port 200.

In this embodiment, since air A inside the accommodation space S is forced out through the air outlet 300 when injecting the resin R, the resin R may be injected into the accommodation space S more uniformly and cured in the accommodation space S more uniformly.

Specifically, the air outlet 300 may be provided in the side frame 150. More specifically, the air outlet 300 may be provided in the first side plate 151 of the side frame 150.

Hereinafter, a method for manufacturing the pack case 56 of the battery pack 50 through the apparatus 10 for manufacturing a battery pack according to an embodiment of the present disclosure will be described in more detail.

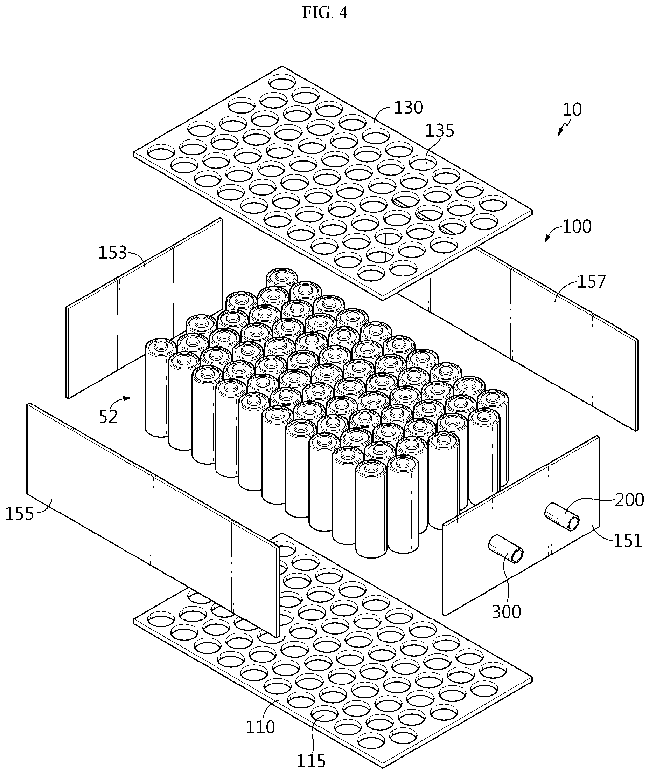

FIGS. 4 to 9 are diagrams illustrating a method according to the invention for manufacturing a battery pack through the apparatus for manufacturing a battery pack of FIG. 2.

Referring to FIG. 4, a manufacturer places the plurality of battery cells 52 in the resin injection frame 100 when manufacturing the pack case of the battery pack. Specifically, the manufacturer covers the plurality of battery cells 52 with the lower frame 110, the upper frame 130 and the side frame 150 of the resin injection frame 100 and couples the lower frame 110, the upper frame 130 and the side frame 150 one another. Accordingly, the accommodation space S (see FIG. 3) is formed in the resin injection frame 100, and the plurality of battery cells 52 are accommodated in the accommodation space S.

Referring to FIG. 5, the manufacturer injects the resin R into the accommodation space S (see FIG. 2) in the resin injection frame 100 through the resin injection port 200. Here, the resin R is injected in a room temperature thin state to prevent thermal damage of the plurality of battery cells 52. Additionally, air in the accommodation space S may be released from the resin injection frame 100 through the air outlet 300 to increase the injection efficiency of the resin R.

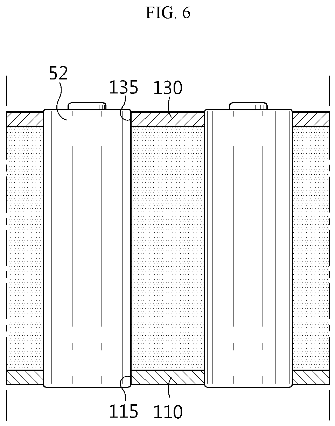

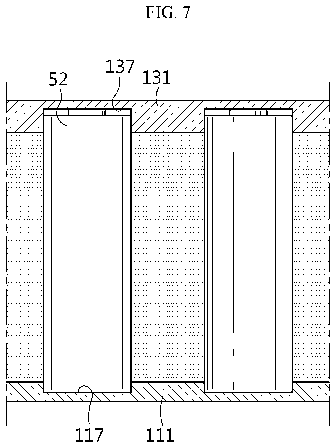

Referring to FIG. 6, when injecting the resin R (see FIG. 5), the plurality of battery cells 52 may be fixed when inserted into the cell insertion hole 115 of the lower frame 110 and the cell insertion hole 135 of the upper frame 130. The fixing structure of the plurality of battery cells 52 is not limited thereto, and the plurality of battery cells 52 may be fixed in any other manner. For example, referring to FIG. 7, the plurality of battery cells 52 may be fixed when inserted into a cell insertion groove 117 provided with a groove structure of a predetermined depth in a lower frame 111 and a cell insertion groove 137 provided with a groove structure of a predetermined depth in an upper frame 131.

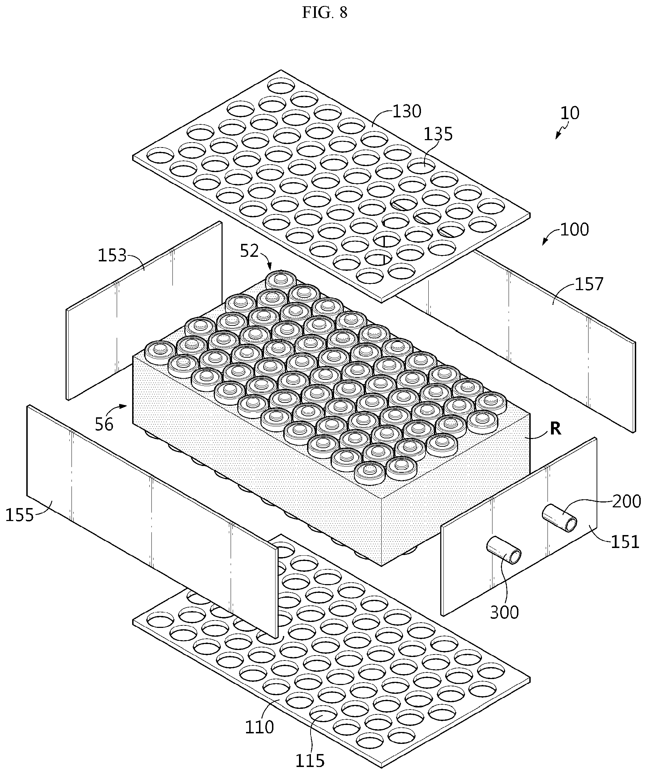

Referring to FIG. 8, when the injected resin R is cured, the manufacturer separates the resin injection frame 100 from the resin R and the plurality of battery cells 52. Specifically, the manufacturer separates the lower frame 110, the upper frame 130 and the side frame 150 from the resin R and the plurality of battery cells 52 by disconnecting the connection of the lower frame 110, the upper frame 130 and the side frame 150 of the resin injection frame 100.

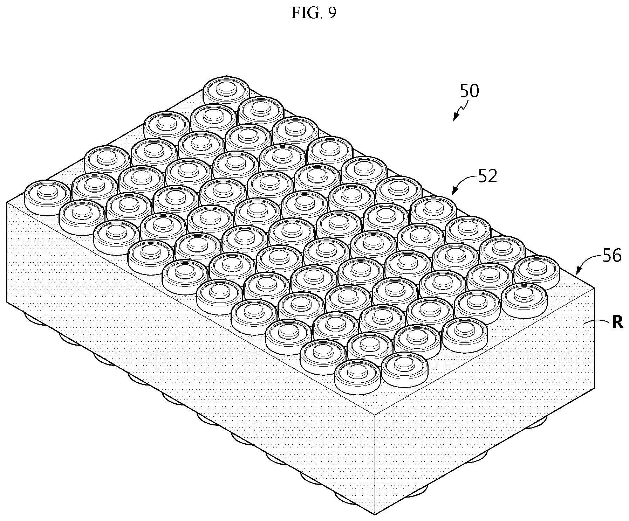

Referring to FIG. 9, the battery pack 50 may include the pack case 56 including the resin R through the manufacturing apparatus 10 (see FIG. 5). The pack case 56 including the potting resin may be a so-called cell-potting resin structure. In this embodiment, it is possible to ensure the insulating properties and mechanical strength through the pack case 56 including the resin R.

In this embodiment, it is possible to manufacture the pack case 56 of the battery pack 50 in a more straightforward and efficient manner than the conventional pack case structure including a plurality of frame members, through the pack case 56 of the cell-potting resin structure.

Accordingly, in this embodiment, it is possible to significantly reduce the manufacturing cost of the pack case 56 of the battery pack 50, and simplify the manufacturing process in a more straightforward and efficient manner through the apparatus 10 for manufacturing a battery pack.

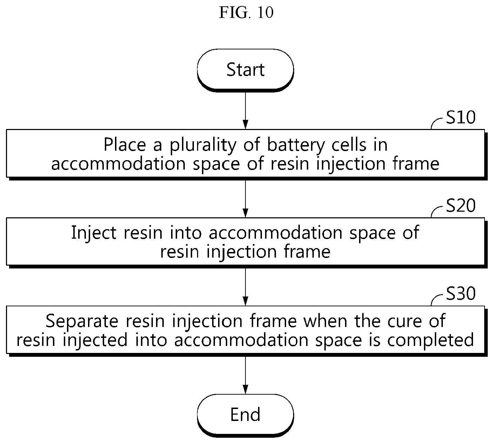

FIG. 10 is a flowchart illustrating a method according to the invention for manufacturing the battery pack of FIG. 1.

Referring to FIG. 10, in the manufacture of the pack case of the battery pack, the manufacturer places the plurality of battery cells in the accommodation space of the resin injection frame (S10). When the placement of the plurality of battery cells is completed, the manufacturer injects a resin for covering the plurality of battery cells into the accommodation space of the resin injection frame (S20).

Here, the resin may be injected into the accommodation space through the resin injection port provided in the resin injection frame. The resin is injected in room temperature state to prevent thermal damage of the plurality of battery cells. When injecting the resin, air in the accommodation space may be released from the resin injection frame through the air outlet.

When the cure of the resin injected into the accommodation space is completed, the resin injection frame is separated from the plurality of battery cells and the cured resin (S30). The cured resin acts as a pack case to accommodate and cover the plurality of battery cells.

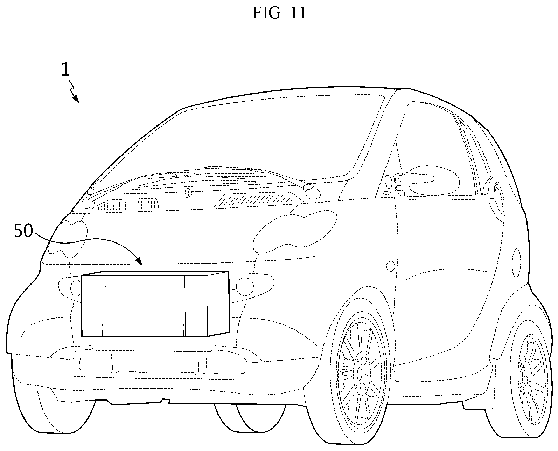

FIG. 11 is a diagram illustrating a vehicle including the battery pack according to an embodiment of the present disclosure.

Referring to FIG. 11, the battery pack 50 may be provided in the vehicle 1 as a fuel source of the vehicle. For example, the battery pack 50 may be provided in the vehicle 1 such as an electric vehicle, a hybrid electric vehicle and any other application using the battery pack 50 as a fuel source.

Additionally, in addition to the vehicle 1, the battery pack 50 may be provided in any other device, apparatus and equipment using secondary batteries, for example, an energy storage system.

The battery pack 50 of this embodiment may be mounted in the vehicle 1 in a modularized form. For example, a plurality of battery packs 50 may be provided according to the required capacity and may be mounted in the vehicle 1 such that they are electrically connected to each other in the vehicle 1.

**In** this embodiment, since the pack case of the battery pack 50 is integrally formed using the potting resin as opposed to the conventional art including a plurality of plate members, it is possible to achieve the slim design of the battery pack 50 and significantly increase the energy density. Additionally, in this embodiment, it is possible to modularize the plurality of battery packs 50 in a more straightforward and convenient manner through the slim structure of the battery pack 50.

According to the various embodiments as described above, it is possible to provide the battery pack 50 with price competitiveness and reduced manufacturing cost, and the apparatus 10 and method for manufacturing a battery pack.

## Claims

1. A method for manufacturing a battery pack (50), comprising:
a plurality of battery cells (52); and
a pack case (56) to accommodate the plurality of battery cells (52),
wherein the pack case (56) is made of a potting resin (R) formed integrally which covers all sides of the plurality of battery cells (52) and is filled to a predetermined height between the plurality of battery cells (52), wherein the plurality of battery cells (52) is positioned such that they are inserted into the cured potting resin (R), with upper and lower ends exposed at least in part; wherein
the potting resin (R) filled between the plurality of battery cells (52) has a room temperature thin state for injection, wherein the method comprises:
placing (S10) the plurality of battery cells (52) in an accommodation space (S) of a resin injection frame (100);
injecting (S20) the resin (R) for covering the plurality of battery cells (52) into the accommodation space (S) of the resin injection frame (100); and
separating (S30) the resin injection frame (100) from the plurality of battery cells (52) and the cured resin (R) when the cure of the resin (R) injected into the accommodation space (S) is completed;
wherein
the resin (R) is injected in a room temperature thin state.

2. The method for manufacturing a battery pack (50) according to claim 1, wherein the resin (R) is injected into the accommodation space (S) through a resin injection port (200) provided in the resin injection frame (100).

3. The method for manufacturing a battery pack (50) according to claim 2, wherein the resin injection frame (100) includes:
a lower frame (110) which covers a bottom of the plurality of battery cells (52);
an upper frame (130) disposed opposite the lower frame (110) to cover a top of the plurality of battery cells (52); and
a side frame (151, 153, 155, 157) detachably connected to the lower frame (110) and the upper frame (130), wherein the side frame (151, 153, 155, 157) covers sides of the plurality of battery cells (52).

4. The method for manufacturing a battery pack (50) according to claim 2, wherein the resin injection frame (100) has an air outlet (300) spaced apart from the resin injection port (200), the air outlet (300) through which air inside the accommodation space (S) is forced out when injecting the resin (R).

5. The method according to claim 1, wherein an upper surface of the potting resin (R) is disposed at a lower position by a predetermined height than the upper end of the plurality of battery cells (52) in a heightwise direction of the plurality of battery cells (52), and
a lower surface of the potting resin (R) is disposed at a higher position by a predetermined height than the lower end of the plurality of battery cells (52) in the heightwise direction of the plurality of battery cells (52).

6. The method according to claim 1, wherein the potting resin (R) includes silicone resin (R).

## Patentansprüche

1. Verfahren zum Herstellen eines Batteriepacks (50), umfassend:
eine Vielzahl von Batteriezellen (52); und
ein Packgehäuse (56) zum Aufnehmen der Vielzahl von Batteriezellen (52),
wobei das Packgehäuse (56) aus einem einstückig ausgebildeten Vergussharz (R) hergestellt ist, das alle Seiten der Vielzahl von Batteriezellen (52) bedeckt und bis zu einer vorbestimmten Höhe zwischen die Vielzahl von Batteriezellen (52) gefüllt ist,
wobei die Vielzahl von Batteriezellen (52) so positioniert sind, dass sie in das ausgehärtete Vergussharz (R) eingesetzt sind, wobei obere und untere Enden zumindest teilweise freiliegen; wobei
das Vergussharz (R), das zwischen die Vielzahl von Batteriezellen (52) gefüllt ist, einen bei Raumtemperatur dünnen Zustand zum Einspritzen aufweist, wobei das Verfahren umfasst:
Platzieren (S10) der Vielzahl von Batteriezellen (52) in einem Aufnahmeraum (S) eines Harzeinspritzrahmens (100);
Einspritzen (S20) des Harzes (R) zum Bedecken der Vielzahl von Batteriezellen (52) in den Aufnahmeraum (S) des Harzeinspritzrahmens (100); und
Trennen (S30) des Harzeinspritzrahmens (100) von der Vielzahl von Batteriezellen (52) und dem ausgehärteten Harz (R), wenn das Aushärten des in den Aufnahmeraum (S) eingespritzten Harzes (R) abgeschlossen ist;
wobei
das Harz (R) in einem bei Raumtemperatur dünnen Zustand eingespritzt wird.

2. Verfahren zum Herstellen eines Batteriepacks (50) nach Anspruch 1, wobei das Harz (R) durch eine Harzeinspritzöffnung (200), die in dem Harzeinspritzrahmen (100) bereitgestellt ist, in den Aufnahmeraum (S) eingespritzt wird.

3. Verfahren zum Herstellen eines Batteriepacks (50) nach Anspruch 2, wobei der Harzeinspritzrahmen (100) umfasst:
einen unteren Rahmen (110), der einen Boden der Vielzahl von Batteriezellen (52) bedeckt;
einen oberen Rahmen (130), der gegenüber dem unteren Rahmen (110) angeordnet ist, um eine Oberseite der Vielzahl von Batteriezellen (52) zu bedecken; und
einen Seitenrahmen (151, 153, 155, 157), der lösbar mit dem unteren Rahmen (110) und dem oberen Rahmen (130) verbunden ist, wobei der Seitenrahmen (151, 153, 155, 157) Seiten der Vielzahl von Batteriezellen (52) bedeckt.

4. Verfahren zum Herstellen eines Batteriepacks (50) nach Anspruch 2, wobei der Harzeinspritzrahmen (100) einen Luftauslass (300) aufweist, der von der Harzeinspritzöffnung (200) beabstandet ist, wobei der Luftauslass (300) durch den Luft innerhalb des Aufnahmeraums (S) beim Einspritzen des Harzes (R) herausgedrückt wird.

5. Verfahren nach Anspruch 1, wobei eine obere Oberfläche des Vergussharzes (R) an einer Position angeordnet ist, die um eine vorbestimmte Höhe niedriger ist als das obere Ende der Vielzahl von Batteriezellen (52) in einer Höhenrichtung der Vielzahl von Batteriezellen (52), und
eine untere Oberfläche des Vergussharzes (R) an einer Position angeordnet ist, die um eine vorbestimmte Höhe höher ist als das untere Ende der Vielzahl von Batteriezellen (52) in der Höhenrichtung der Vielzahl von Batteriezellen (52).

6. Verfahren nach Anspruch 1, wobei das Vergussharz (R) Silikonharz (R) umfasst.

## Revendications

1. Procédé de fabrication d'un bloc-batterie (50), comprenant :
une pluralité de cellules de batterie (52) ; et
un boîtier de bloc (56) recevant la pluralité de cellules de batterie (52),
le boîtier de bloc (56) étant constitué d'une résine d'enrobage (R) formée de façon intégrale, couvrant tous les côtés de la pluralité de cellules de batterie (52), et remplie jusqu'à une hauteur prédéterminée entre la pluralité de cellules de batterie (52),
la pluralité des cellules de batterie (52) étant positionnées de façon à être insérées dans la résine d'enrobage durcie (R), avec des extrémités supérieures et inférieures exposées au moins en partie ;
la résine d'enrobage (R) remplie entre la pluralité de cellules de batterie (52) présentant un état mince à température ambiante pour l'injection, le procédé comprenant :
l'installation (S10) de la pluralité des cellules de batterie (52) dans un espace de réception (S) d'un bâti d'injection de résine (100) ;
l'injection (S20) de la résine (R) pour couvrir la pluralité de cellules de batterie (52) dans l'espace de réception (S) du bâti d'injection de résine (100) ; et
la séparation (S30) du bâti d'injection de résine (100) de la pluralité des cellules de batterie (52) et la résine durcie (R) lorsque le durcissement de la résine (R) injectée dans l'espace de réception (S) est terminé ;
dans lequel
la résine (R) est injectée dans un état mince à température ambiante.

2. Procédé de fabrication d'un bloc-batterie (50) selon la revendication 1, la résine (R) étant injectée dans l'espace de réception (S) par un orifice d'injection de résine (200) agencé dans le bâti d'injection de résine (100).

3. Procédé de fabrication d'un bloc-batterie (50) selon la revendication 2, le bâti d'injection de résine (100) comprenant :
un bâti inférieur (110) couvrant une partie inférieure de la pluralité de cellules de batterie (52) ;
un bâti supérieur (130) disposé en face du bâti inférieur (110) pour couvrir une partie supérieure de la pluralité de cellules de batterie (52) ; et
un bâti latéral (151, 153, 155, 157) connecté de façon amovible détaché au bâti inférieur (110) et au bâti supérieur (130), le bâti latéral (151, 153, 155, 157) couvrant des côtés de la pluralité de cellules de batterie (52).

4. Procédé de fabrication d'un bloc-batterie (50) selon la revendication 2, le bâti d'injection de résine (100) possédant une bouche d'air (300) espacée de l'orifice d'injection de résine (200), la bouche d'air (300) par laquelle l'air à l'intérieur de l'espace de réception (S) est expulsé lors de l'injection de la résine (R).

5. Procédé selon la revendication 1, une surface supérieure de la résine d'enrobage (R) étant disposée dans une position inférieure, d'une hauteur prédéterminée, à celle de l'extrémité supérieure de la pluralité de cellules de batterie (52) dans le sens de la hauteur de la pluralité de cellules de batterie (52), et
une surface inférieure de la résine d'enrobage (R) étant disposée dans une position supérieure, d'une hauteur prédéterminée, à celle de l'extrémité supérieure de la pluralité de cellules de batterie (52) dans le sens de la hauteur de la pluralité de cellules de batterie (52).

6. Procédé selon la revendication 1, la résine d'enrobage (R) comprenant de la résine de silicone (R).
